# EUROPÄISCHE PATENTANMELDUNG

(11) **EP 1 908 358 A2**
(43) Veröffentlichungstag der Anmeldung: **09.04.2008**
(21) Anmeldenummer: 07117873.5
(22) Anmeldetag: 04.10.2007
(51) Int. Cl.: A23L 1/30, A23C 9/20

(54) **Gesundheitsfördernde Nahrungsmittelzusammensetzung**

(30) Priorität: 04.10.2006 DE 102006046960
(71) Anmelder: Euro Allianz Pharma GmbH, 22767 Hamburg (DE)
(72) Erfinder: Neugebauer, Ottmar, 90587, Veitsbron (DE)
(74) Vertreter: Huber, Arnulf

(57) **Zusammenfassung**

Die vorliegende Erfindung betrifft eine gesundheitsfördernde Nahrungsmittelzusammensetzung, die β-Glucan und ein Milchprodukt sowie vorzugsweise Zink enthält.

## Beschreibung

Die vorliegende Erfindung betrifft eine gesundheitsfördernde Nahrungsmittelzusammensetzung, die β-Glucan und ein Milchprodukt enthält.

Die traditionelle chinesische Medizin kennt seit Jahrhunderten neben anderen Naturprodukten auch Pilze, die gesundheitsfördernde Eigenschaften haben. In den vergangenen Jahrzehnten durchgeführte Untersuchungen haben ergeben, dass für diese Eigenschaften bestimmte biologisch aktive Polysaccharide eine wichtige Rolle spielen, wobei die meisten dieser biologisch aktiven Polysaccharide zur Stoffklasse der β-Glucane zu zählen sind.

β-Glucane werden daher zunehmend gezielt als Bestandteile von Zusammensetzungen verwendet, die positive Auswirkungen auf die Gesundheit haben sollen. Solche Zusammensetzungen werden vor allem in trockener Form als Tabletten oder Kapseln oder in flüssiger Form als Konzentrate auf Basis von Wasser oder Fruchtsäften angeboten.

So beschreibt US 2006/0147550 A1 eine Formulierung zur Stärkung und Stimulierung des Immunsystems, die β-Glucan, Ubiquinon, Vitamine und Mineralstoffe enthält. Diese Formulierung wird bevorzugt in Form einer Kapsel oral appliziert.

Die Nutrimmun GmbH bietet unter dem Namen nutriGlucan® ein Nahrungsergänzungsmittel in Form von Tabletten an, das als wesentlichen Bestandteil eine Hefe-Fraktion enthält, die reich an β-Glucan ist. Dieses Nahrungsergänzungsmittel soll zur Unterstützung des Immunsystems in Belastungssituationen dienen.

Es hat sich gezeigt, dass einer der entscheidenden Faktoren für die biologische Wirkung von β-Glucanen in einem Organismus ihre Bioverfügbarkeit ist. Viele an sich hoch bioaktive β-Glucane sind jedoch schlecht oder gar nicht wasserlöslich. Daher entfalten solche β-Glucane bei einer Applikation beispielsweise als Tablette oder in wässriger Lösung oder Suspension nur eine geringe biologische Wirksamkeit.

Zur Überwindung der geringen Wasserlöslichkeit können β-Glucane chemisch modifiziert werden. So werden von S.P. Wasser (Appl. Microbiol. Biotechnol. 2002, 60, 258-274) verschiedene Möglichkeiten zur chemischen Modifizierung von β-Glucanen beschrieben, durch die die Bioverfügbarkeit und die biologische Aktivität vieler β-Glucane verbessert werden soll. Die chemischen Modifikationen der β-Glucane sind allerdings aufwendig. Außerdem sind chemisch modifizierte β-Glucane für viele Anwendungsbereiche, insbesondere für Produkte auf Basis natürlicher Inhaltsstoffe, nicht akzeptabel.

Der Erfindung liegt somit die Aufgabe zugrunde, eine gesundheitsfördernde Nahrungsmittelzusammensetzung auf Basis von β-Glucan bereitzustellen, in der β-Glucan eine verbesserte Bioverfügbarkeit hat.

Zur Lösung dieser Aufgabe wird erfindungsgemäß eine gesundheitsfördernde Nahrungsmittelzusammensetzung vorgeschlagen, die (a) β-Glucan und (b) ein Milchprodukt sowie außerdem vorzugsweise Zink enthält.

Bevorzugte Ausführungsformen und Vorteile der Erfindung ergeben sich aus der nachfolgenden Beschreibung und den Patentansprüchen.

β-Glucane stellen eine Klasse von Naturstoffen dar, die durch bestimmte gemeinsame Merkmale miteinander verbunden sind. Der Begriff "β-Glucane" stellt daher einen Sammelbegriff für unterschiedliche chemische Verbindungen dar, die solche Merkmale besitzen und dadurch jeweils als "β-Glucan" gekennzeichnet sind. Als Naturstoffe werden β-Glucane üblicherweise aus natürlichen Quellen gewonnen, in denen sie als komplexe Gemische unterschiedlicher β-Glucane vorliegen. Insofern kann der Begriff "β-Glucan" auch für die Mischung von β-Glucanen stehen, die aus einer natürlichen Quelle gewonnen werden, oder für eine bestimmt Fraktion einer solchen Mischung.

β-Glucane sind Polysaccharide, deren Grundgerüst im Wesentlichen aus β-verknüpften D-Glucose-Einheiten aufgebaut ist. Biologisch aktive β-Glucane enthalten beispielsweise häufig eine Hauptkette, in der die D-Glucose-Einheiten durch β-(1→3)-glycosidische Bindungen verknüpft sind, und Seitenketten, die über β-(1→6)-glycosidische Bindungen mit der Hauptkette verknüpft sind. Solche β-Glucane können auch α-(1→3)-, α-(1→4)-, α-(1→6)-verknüpfte Einheiten enthalten. Darüber hinaus können β-Glucane auch mit Proteinen verknüpft sein.

Viele β-Glucane haben eine biologische Aktivität. Besonders wichtige Wirkungen der β-Glucane sind die Stimulation des Immunsystems und die Antitumorwirkung. β-Glucane stimulieren Makrophagen, T-Lymphozyten, B-Zellen und natürliche Killerzellen und modulieren die Produktion von Zytokinen wie Tumor-Nekrose-Faktor Alpha (TNF-α) und Interleukin-1-Beta (IL-1-β). Auf der Stimulierung des Immunsystems beruht vermutlich auch die Antitumorwirkung der β-Glucane. So eignen sich β-Glucane insbesondere zur Krebsprophylaxe, zur milden nicht-invasiven Krebstherapie, zur Verhinderung der Metastasierung und zur begleitenden Therapie mit Chemotherapie. Darüber hinaus zeigen β-Glucane auch antimikrobielle, anti-atherosklerotische und antiinflammatorische Eigenschaften.

Auf Grund ihrer das Immunsystem stimulierenden Wirkung eignen sich β-Glucane darüber hinaus ganz allgemein zur Förderung der Abwehrkräfte, der Gesundheit und des Wohlbefindens. Daher können β-Glucane einen wertvollen Beitrag zur persönlichen Gesundheitsförderung oder zur begleitenden Förderung einer Therapie darstellen. Insbesondere können β-Glucane wegen ihrer wertvollen biologischen Eigenschaften einen Beitrag zur gesunden Ernährung leisten, wenn sie in Form geeigneter Nahrungsmittelzusammensetzungen angeboten und verzehrt werden.

Es wurde erfindungsgemäß überraschend gefunden, dass eine gesundheitsfördernde Nahrungsmittelzusammensetzung, die eine Kombination von β-Glucan mit einem Träger auf Basis eines Milchprodukts enthält, geeignet ist, die Bioverfügbarkeit der enthaltenen β-Glucane gegenüber Zusammensetzungen in trockener Form oder in flüssiger Form auf Basis von Wasser oder Fruchtsäften zu verbessern. Dadurch können die β-Glucane in einer im Hinblick auf ihre biologische Aktivität verbesserten Form bereitgestellt werden. Darüber hinaus können β-Glucane so in einer für Verbraucher attraktiven Darreichungsform angeboten werden.

Dabei scheint sich bei der Kombination von β-Glucan mit einem Träger auf Basis eines Milchprodukts ein Komplex zwischen dem β-Glucan und Bestandteilen des Milchproduktes zu bilden, der die Fähigkeit des Organismus zur Aufnahme und zur Verwertung des β-Glucans steigert.

Geeignete Milchprodukte sind fermentierte und nicht fermentierte Milchprodukte, insbesondere Vollmilch, teilentrahmte Milch, Magermilch, Frischmilch, Molke, Buttermilch, Joghurt, Kefir und/oder Dickmilch. Alternativ können auch Sojamilch und/oder Mandelmilch eingesetzt werden.

In einer bevorzugten Ausführungsform enthält die gesundheitsfördernde Nahrungsmittelzusammensetzung nicht fermentierte Milchprodukte, insbesondere Vollmilch, teilentrahmte Milch, Magermilch, Frischmilch, Sojamilch und/oder Mandelmilch.

Bevorzugt enthält eine erfindungsgemäße gesundheitsfördernde Nahrungsmittelzusammensetzung Milchprodukt in einem Anteil von 1 Gew.-% bis 99,9 Gew.-%, besonders bevorzugt 50 Gew.-% bis 95 Gew.-% (wie z.B. 60 Gew.-%, 70 Gew.-%, 80 Gew.-% und 90 Gew.-%). Bevorzugte Anteile an β-Glucan sind 0,001 Gew.-% bis 2 Gew.-% (wie z.B. 0,01 Gew.-%, 0,05 Gew.-%, 0,1 Gew.-%, 0,5 Gew.-% und 1 Gew.-%).

Natürliche Quellen für β-Glucane sind insbesondere Hefen, Basidomyceten, beispielsweise Speisepilze, Asomyceten, Oomyceten, Flechten und höhere Pflanzen.

Beispiele für geeignete Organismen sind die Hefe *Saccharomyces cerevisiae,* die Basidomyceten *Grifola frondosa* (Maitake), *Shizophyllum commune, Lentinula edodes* (Shiitake), *Pleurotus ostreatus* (Austernpilz) und *Trametes versicolor,* der Asomycet *Sclerotium glucanium,* der Oomycet *Phytophtora parasitica,* die Flechte *Cetraria Islandica* und die höheren Pflanzen *Avena Sa*tiva (Hafer) und *Hordeum vulgare* (Gerste).

Beispiele für β-Glucane, die aus solchen Organismen gewonnen werden, sind Schizophyllan (aus *Shizophyllum commune*), Lentinan (aus *Lentinula edodes*), Krestin (auch als PSK bezeichnet, aus *Trametes versicolor*), Sclereoglucan (aus *Sclerotium glucanium*) und Lichenin/Isolichenin (aus *Cetraria Islandica*).

β-Glucane können aus geeigneten natürlichen Quellen extrahiert werden, wobei ein β-Glucan-haltiger Extrakt oder mehrere Extrakte, die unterschiedliche Fraktionen von β-Glucanen enthalten, gewonnen werden. Erfindungsgemäße gesundheitsfördernde Zusammensetzungen können β-Glucane in Form solcher Extrakte enthalten. Bevorzugt können erfindungsgemäße gesundheitsfördernde Zusammensetzungen β-Glucane aus geeigneten natürlichen Quellen auch direkt in geeigneten Formen dieser natürlichen Quellen enthalten. So sind insbesondere solche erfindungsgemäße gesundheitsfördernde Zusammensetzungen bevorzugt, die β-Glucane in Form von Hefekonzentrat und/oder Pilzpulver enthalten. Bevorzugte Anteile an Hefekonzentrat sind 0,005 Gew.-% bis 5 Gew.-% (wie z.B. 0,01 Gew.-%, 0,05 Gew.-%, 0,1 Gew.-%, 0,5 Gew.-%, 1 Gew.-% und 2 Gew.-%). Bevorzugte Anteile an Pilzpulver sind 0,005 Gew.-% bis 5 Gew.-% (wie z.B. 0,01 Gew.-%, 0,05 Gew.-%, 0,1 Gew.-%, 0,5 Gew.-%, 1 Gew.-% und 2 Gew.-%).

Wichtig für die biologische Aktivität von β-Glucanen sind auch die unterschiedlichen chemischen und/oder strukturellen Eigenschaften der jeweiligen β-Glucane. Zu diesen Eigenschaften gehören insbesondere das Molekulargewicht, der Verzweigungsgrad, das Verzweigungsmuster und die räumliche Struktur. Dabei können Unterschiede im Verzweigungsgrad beispielsweise in der Anzahl der Verzweigungspunkte oder der Anzahl oder Länge der Seitenketten liegen. Unterschiede im Verzweigungsmuster können beispielsweise die Art der Verknüpfungen, z.B. β-(1→3)-glycosidisch oder β-(1→4)-glycosidisch, oder das Verhältnis verschiedener Arten von Verknüpfungen betreffen. Die räumliche Struktur kann insbesondere eine helikale dreidimensionale Struktur der β-Glucane in Lösung sein.

Verschiedene β-Glucane, die sich im Hinblick auf einzelne oder mehrere der genannten Faktoren unterscheiden, können sich auch im Hinblick auf ihre biologischen Eigenschaften unterscheiden. So können unterschiedliche β-Glucane unterschiedlich starke biologische Aktivität zeigen. Beispielsweise haben vielfach β-Glucane mit einem hohen Molekulargewicht höhere biologische Aktivität als solche mit geringerem Molekulargewicht.

Andererseits können unterschiedliche β-Glucane aber auch unterschiedliche Arten von biologischer Aktivität zeigen. So können zum Beispiel unterschiedliche β-Glucane unterschiedliche Faktoren des Immunsystems besonders stimulieren. In bevorzugten Ausführungsformen kann eine erfindungsgemäße gesundheitsfördernde Nahrungsmittelzusammensetzung daher β-Glucane enthalten, die ein breites Spektrum unterschiedlicher chemischer und/oder struktureller Eigenschaften abdecken.

Geeignete Organismen als natürliche Quellen für β-Glucane liefern üblicherweise eine komplexe Mischung unterschiedlicher β-Glucane. Dabei können sich teilweise selbst innerhalb einer Spezies Unterschiede in der Verteilung der gebildeten β-Glucane in Abhängigkeit von den jeweiligen Kulturbedingungen oder Lagerbedingungen nachweisen lassen. Größere Unterschiede lassen sich häufig zwischen unterschiedlichen Arten beobachten. Besonders große Unterschiede im Spektrum der gebildeten β-Glucane zeigen sich im Vergleich unterschiedlicher Abteilungen von Organismen, beispielsweise zwischen aus Hefen und Basidomyceten gebildeten β-Glucanen.

In bevorzugten Ausführungsformen enthalten erfindungsgemäße gesundheitsfördernde Nahrungsmittelzusammensetzungen daher β-Glucane aus unterschiedlichen biologischen Quellen, besonders bevorzugt von unterschiedlichen Abteilungen von Organismen, wie aus Hefen und Basidomyceten. Dadurch kann ein breites Spektrum unterschiedlicher β-Glucane mit unterschiedlichen biologischen Aktivitäten zur Verfügung gestellt werden. Dabei treten auf Grund der unterschiedlichen biologischen Aktivitäten synergistische Effekte auf, die zu einer besonders intensiven gesundheitsfördernden Wirkung führen.

Besonders bevorzugte erfindungsgemäße gesundheitsfördernde Nahrungsmittelzusammensetzungen enthalten außerdem Zink. Zink ist ein wichtiges Spurenelement, das insbesondere für das Immunsystem von Bedeutung ist. Das Vorhandensein ausreichender Mengen an Zink ist Voraussetzung für ein funktionierendes Immunsystem. Wird das Immunsystem stimuliert, steigt der Bedarf an Zink an. Die Kombination erfindungsgemäßer Nahrungsmittelzusammensetzungen mit Zink kann den steigenden Bedarf an Zink auf Grund der Immunstimulation durch die β-Glucane decken helfen und zugleich diese Immunstimulation synergistisch verstärken. Dabei wird zusätzlich durch das Milchprodukt die Bioverfügbarkeit des Zink erhöht.

Zink kann in Form anorganischer oder organischer Zinksalze zur Verfügung gestellt werden, insbesondere in Form von Zinkoxid, Zinksulfat und/oder organischer Zinksalzen. Besonders bevorzugt enthalten erfindungsgemäße gesundheitsfördernde Nahrungsmittelzusammensetzungen Zinkoxid. Zinkoxid wirkt im Gegensatz zu anderen Zinksalzen nicht adstringierend und eiweißfällend. Bevorzugte Anteile an Zink, berechnet als Metall, sind 0,0001 Gew.-% bis 0,1 Gew.-%, besonders bevorzugt 0,001 Gew.% bis 0,01 Gew.-% (wie z.B. 0,002 Gew.-%, 0,004 Gew.-%, 0,006 Gew.-% und 0,008 Gew.-%).

Erfindungsgemäße gesundheitsfördernde Nahrungsmittelzusammensetzungen können beliebige weitere für Nahrungsmittel geeignete Bestandteile enthalten. Zu bevorzugten weiteren Bestandteilen gehören Wasser, Fruchtsäfte, Fruchtzubereitungen (Produkte mit Fruchtanteil), Zucker, modifizierte Stärke, Säureregulatoren, Verdickungsmittel und/oder Farbstoffe.

Die erfindungsgemäße gesundheitsfördernde Nahrungsmittelzusammensetzung ist vorzugsweise im Wesentlichen oder sogar völlig frei von Konservierungsstoffen.

### Beispiel:

100g einer erfindungsgemäßen gesundheitsfördernden Nahrungsmittelzusammensetzung enthalten:

| | |
|---|---|
| β-Glucan-reiches Hefekonzentrat | 250 mg |
| Shiitake Pilz-Pulver | 100 mg |
| teilentrahmte Milch | 87,96 g |
| Zinkoxid | 6,23 mg |
| Wasser | 2,8 g |
| Zucker | 6,42 g |
| Orangensaft aus Konzentrat | 1,2 g |
| Sanddornpüree | 0,6 g |
| modifizierte Stärke | 0,24 g |
| Aromen | 0,2 g |
| Säureregulator Dikaliumphosphat | 0,1 g |
| Verdickungsmittel Carrageen | 0,075 g |
| Farbstoffe (Riboflavin und Beta-Carotin) | 0,0007 g |

## Patentansprüche

1. Gesundheitsfördernde Nahrungsmittelzusammensetzung, die (a) β-Glucan und (b) ein Milchprodukt, das aus Vollmilch, teilentrahmter Milch, Magermilch und Frischmilch ausgewählt ist, Sojamilch und/oder Mandelmilch enthält.

2. Gesundheitsfördernde Nahrungsmittelzusammensetzung, die (a) β-Glucan, (b) ein Milchprodukt, Sojamilch und/oder Mandelmilch und (c) Zink enthält.

3. Gesundheitsfördernde Nahrungsmittelzusammensetzung nach Anspruch 2, bei der das Milchprodukt Vollmilch, teilentrahmte Milch, Magermilch, Frischmilch, Molke, Buttermilch, Joghurt, Kefir und/oder Dickmilch enthält.

4. Gesundheitsfördernde Nahrungsmittelzusammensetzung nach einem der vorangehenden Ansprüche, die β-Glucane aus Hefen, Basidomyceten, Asomyceten, Oomyceten, Flechten und/oder höheren Pflanzen enthält.

5. Gesundheitsfördernde Nahrungsmittelzusammensetzung nach einem der vorangehenden Ansprüche, die β-Glucane aus *Saccharomyces cerevisiae* enthält.

6. Gesundheitsfördernde Nahrungsmittelzusammensetzung nach einem der vorangehenden Ansprüche, die β-Glucane aus *Grifola frondosa, Shizophyllum commune, Lentinula edodes, Pleurotus ostreatus* und/oder *Trametes versicolor* enthält.

7. Gesundheitsfördernde Nahrungsmittelzusammensetzung nach einem der vorangehenden Ansprüche, die einen Pilzbestandteil, insbesondere Pilzpulver, mit hohem Anteil an β-Glucan enthält.

8. Gesundheitsfördernde Nahrungsmittelzusammensetzung nach einem der vorangehenden Ansprüche, die einen Hefebestandteil, insbesondere Hefekonzentrat, mit hohem Anteil an β-Glucan enthält.

9. Gesundheitsfördernde Nahrungsmittelzusammensetzung nach einem der vorangehenden Ansprüche, die β-Glucane aus zwei unterschiedlichen natürlichen β-Glucan-Quellen, bevorzugt unterschiedlichen Abteilungen von Organismen enthält.

10. Gesundheitsfördernde Nahrungsmittelzusammensetzung nach einem der vorangehenden Ansprüche, die β-Glucane aus einer Hefe und einem Basidomyceten enthält.

11. Gesundheitsfördernde Nahrungsmittelzusammensetzung nach einem der vorangehenden Ansprüche 2 bis 10, die Zink als Zinksalz, bevorzugt als Zinkoxid, Zinksulfat und/oder organisches Zinksalz, besonders bevorzugt Zinkoxid enthält.

12. Gesundheitsfördernde Nahrungsmittelzusammensetzung nach einem der vorangehenden Ansprüche, die Milchprodukt in einem Anteil von 1 Gew.-% bis 99,9 Gew.-%, bevorzugt 50 Gew.-% bis 95 Gew.-% enthält.

13. Gesundheitsfördernde Nahrungsmittelzusammensetzung nach einem der vorangehenden Ansprüche, die β-Glucan in einem Anteil von 0,001 Gew.-% bis 2 Gew.-% enthält.

14. Gesundheitsfördernde Nahrungsmittelzusammensetzung nach einem der vorangehenden Ansprüche, die Hefekonzentrat in einem Anteil von 0,005 Gew.-% bis 5 Gew.-% enthält.

15. Gesundheitsfördernde Nahrungsmittelzusammensetzung nach einem der vorangehenden Ansprüche, die Pilzpulver in einem Anteil von 0,005 Gew.-% bis 5 Gew.-% enthält.

16. Gesundheitsfördernde Nahrungsmittelzusammensetzung nach einem der vorangehenden Ansprüche 2 bis 15, die Zink, berechnet als Metall, in einem Anteil von 0,0001 Gew.-% bis 0,1 Gew.-%, bevorzugt 0,001 Gew.-% bis 0,01 Gew.-% enthält.

17. Gesundheitsfördernde Nahrungsmittelzusammensetzung nach einem der vorangehenden Ansprüche, die Fruchtsaft und/oder Fruchtzubereitung enthält.

18. Gesundheitsfördernde Nahrungsmittelzusammensetzung nach einem der vorangehenden Ansprüche, die zusätzlich Wasser, Zucker, modifizierte Stärke, Säureregulator, Verdickungsmittel und/oder Farbstoff enthält.

19. Gesundheitsfördernde Nahrungsmittelzusammensetzung nach einem der vorangehenden Ansprüche, die frei oder zumindest im Wesentlichen frei von Konservierungsstoffen ist.
